# FASCICULE DE BREVET EUROPEEN

(11) **EP 1 120 544 B1**
(45) Date de publication et mention de la délivrance du brevet: **15.09.2004**
(21) Numéro de dépôt: 00400137.6
(22) Date de dépôt: 20.01.2000
(51) Int. Cl.: F01D 5/08, F02C 7/18

(54) **Turbomachine comportant un dispositif de fourniture de gaz pressurisé**
Turbomaschine mit einer Vorrichtung zur Lieferung eines Druckgases
Turbo machine with a device for supplying a pressurized gas

(43) Date de publication de la demande: 01.08.2001
(73) Titulaire: Snecma Moteurs, 75015 Paris (FR)
(72) Inventeur: Coudray, Xavier Gérard André, Demigny 71150 Chagny (FR); Taillant, Jean-Claude Christian, 77000 Vaux Le Penil (FR); Derrien, Mischael François Louis, 77480 Mouy sur Seine (FR); Tassin, Thierry Henri Marcel, 91800 Brunoy (FR); Marchi, Marc Roger, 77350 Le Mee (FR); Texier, Christophe Bernard, 77000 Melun (FR); Pellier, Philippe Christian, 77000 Melun (FR); Valente, Isabelle Marie Monique, 92150 Suresnes (FR)

(56) Documents cités:
- EP-A- 0 806 544
- GB-A- 836 952
- US-A- 5 271 711

## Description

L'invention se rapporte aux turbomachines, notamment mais non exclusivement aux turbomoteurs pour aéronefs, et plus particulièrement à des turbomachines comportant au moins un dispositif de fourniture de gaz pressurisé fonctionnant à partir d'un prélèvement de gaz sur le compresseur. L'invention propose aussi une application de ce dispositif au refroidissement du rotor de turbine.

Les turbomachines sont des machines bien connues comportant essentiellement un compresseur rotatif à aubes, une chambre de combustion et une turbine, la veine de gaz qui les traverse de l'amont vers l'aval subissant un cycle thermodynamique approprié. Les turbomachines sont utilisées notamment dans l'aéronautique pour propulser les aéronefs, ainsi que dans l'industrie. Elles comportent fréquemment au moins un dispositif de fourniture de gaz pressurisé et plus ou moins froid destinés à différents usages : refroidissement de certains organes tels la turbine, contrôle des jeux de fonctionnement, réchauffage du carburant ou du lubrifiant, servitudes de l'aéronef, etc...

Un tel dispositif de fourniture de gaz pressurisé comporte habituellement des moyens pour prélever à la pression voulue du gaz sur le compresseur, des moyens pour refroidir à la température voulue le gaz ainsi prélevé, ainsi que des moyens pour amener ce gaz aux organes qui l'utiliseront.

Les moyens pour prélever le gaz sur le compresseur comportent au moins un orifice de prélèvement débouchant dans la veine de gaz et disposé à un endroit du compresseur où la pression a atteint un niveau suffisant.

Les moyens pour refroidir le gaz ainsi prélevé comprennent essentiellement un échangeur thermique connecté à l'orifice de prélèvement par un conduit. L'échangeur thermique est constitué par une cavité de refroidissement avec une entrée et une sortie, cette cavité étant bordée sur une surface suffisante par une surface de refroidissement au contact d'un fluide réfrigérant, le gaz prélevé traversant ladite cavité de refroidissement depuis l'entrée jusqu'à la sortie en léchant ladite surface de refroidissement. Le fluide réfrigérant peut être l'air ambiant, pulsé si nécessaire, mais aussi le lubrifiant ou le carburant qui servent alors de fluides caloporteurs et doivent dans ce cas être refroidis eux-mêmes, ceci se faisant le plus souvent avec d'autres refroidisseurs au contact de l'air ambiant.

Le gaz est ensuite amené aux organes bénéficiaires par des conduits. Le refroidissement du rotor de turbine est plus délicat : les disques du rotor sont habituellement traversés par une cavité radiale qui se prolonge dans chaque aube. Le conduit amenant le gaz à la cavité radiale passe par le centre de la turbomachine au voisinage de son axe de rotation, et peut être constitué par l'arbre de turbine lui-même.

De tels dispositifs de fourniture de gaz pressurisé présentent de multiples inconvénients : d'abord, le prélèvement de gaz sur le compresseur abaisse les performances de celui-ci, ces performances conditionnant directement le rendement thermodynamique de la turbomachine. Ensuite, le refroidissement du gaz prélevé exige des refroidisseurs placés à l'extérieur de la machine, ces refroidisseurs étant générateurs de trainées dans le cas des turbomoteurs pour aéronefs. Dans le cas où un fluide caloporteur intermédiaire est utilisé, tels le lubrifiant ou le carburant, une régulation efficace doit être mise en place afin de ne pas risquer la carbonisation de ce fluide caloporteur résultant d'un échauffement excessif. Enfin, le refroidissement du rotor de turbine exige un circuit complexe et lourd dont une partie doit passer par le centre de la turbomachine et interférer avec l'arbre de turbine.

Un premier problème à résoudre est de réduire l'abaissement des performances du compresseur.

Un second problème à résoudre est de simplifier et d'alléger le refroidissement du rotor de turbine.

L'invention propose une turbomachine comportant un compresseur rotatif à aubes traversé de l'amont vers l'aval par une veine de gaz dont ledit compresseur assure la compression, ledit compresseur comportant un rotor, ledit rotor comportant une paroi extérieure au contact de la veine de gaz, ladite turbomachine comportant aussi un dispositif de fourniture de gaz pressurisé, ledit dispositif de fourniture comportant notamment un orifice de prélèvement de gaz connecté à l'entrée d'une cavité de refroidissement, ledit orifice de prélèvement étant sur le compresseur et débouchant dans la veine de gaz, ladite cavité de refroidissement comportant aussi une sortie ainsi qu'une surface de refroidissement suffisante, le gaz prélevé dans la veine de gaz par l'orifice de prélèvement étant susceptible de passer contre ladite surface de refroidissement entre l'entrée et la sortie,
la cavité de refroidissement étant dans le rotor du compresseur ;
la surface de refroidissement étant constituée au moins en partie par au moins une partie de la paroi extérieure du rotor de compresseur ;
Une telle turbomachine est remarquable en ce que :
la surface de refroidissement est en amont de l'orifice de prélèvement.

Une telle disposition a pour effet de refroidir le gaz prelevé par transfert de chaleur dans la veine de gaz à travers la paroi extérieure du rotor de compresseur, et pour résultat de remettre dans la veine de gaz au niveau du compresseur une partie de l'énergie prélevée, ce qui réduit l'abaissement des performances du compresseur résultant du prélèvement de gaz.

On comprend que le transfert de la chaleur, depuis le gaz prélevé vers la veine de gaz, est rendu possible par le fait que cet échange s'effectue en amont de l'orifice de prélèvement de gaz, c'est à dire dans une zone du compresseur où la veine de gaz est à une température inférieure à la température qu'elle a au niveau de l'orifice de prélèvement. Cet échange est rendu efficace par la présence des aubes du rotor, ces aubes recevant par conduction thermique une partie de la chaleur arrivant dans la paroi extérieure du rotor de compresseur, ces aubes restituant ensuite la chaleur à la veine de gaz grâce à la surface de leurs pales qui est importante et qui est balayée à grande vitesse par le gaz circulant dans la veine.

On comprend aussi que la surface de refroidissement doit être suffisante pour permettre le refroidissement du gaz prélevé, l'homme du métier définissant ladite surface d'échange thermique en fonction des caractéristiques de la turbomachine, du point de prélèvement du gaz, ainsi que du débit et de la température du gaz pressurisé à fournir.

La présente invention présente l'avantage d'être simple à mettre en oeuvre et d'utiliser largement les moyens existants, ce qui permet d'abaisser la masse et le coût de la turbomachine.

La présente invention ne saurait être confondue avec le dispositif divulgué par le brevet US 5,271,711 (D1) cité au rapport de recherche. En effet, D1 divulgue un dispositif de refroidissement du rotor intégré dans un système de contrôle des jeux entre le rotor et le stator du turboréacteur, ce dispositif comportant essentiellement des cavités de refroidissement dans le rotor et des surfaces de refroidissement constituées par la paroi externe du rotor et par les disques (14). Sachant que l'air (21) arrive à environ 75°C en amont du compresseur et en ressort en aval à une température de 400°C à 450°C du fait des compressions successives qu'il subit, l'air froid prélevé en amont du compresseur et passant à l'intérieur du compresseur permet de refroidir ce compresseur et de réduire sa dilatation thermique. Ainsi l'air froid prélevé se réchauffe à l'intérieur du compresseur, et l'énergie thermique ainsi mise en jeu est perdue.
Dans la présente invention au contraire, de l'air à haute pression est prélevé en amont du compresseur, c'est à dire au point le plus chaud, cet air étant ensuite refroidi au contact de la paroi extérieur et des disques, l'énergie thermique étant ainsi récupérée dans le cycle thermique du turboréacteur, cet air à haute pression ainsi refroidi étant alors disponible pour refroidir d'autres organes du turboréacteur, en l'occurrence la turbine.

Avantageusement, la surface de refroidissement s'étend globalement de l'aval vers l'amont, c'est à dire que le gaz prélevé balaie la surface de refroidissement globalement de l'aval vers l'amont. Cette disposition a pour effet d'amener le gaz prélevé contre des zones de la surface de refroidissement globalement de plus en plus froides, et pour résultat de permettre un abaissement plus important de la température du gaz prélevé. Cette disposition présente aussi l'avantage de remettre la chaleur régulièrement dans la veine de gaz le long du compresseur, ce qui permet de ne pas perturber le fonctionnement dudit compresseur.

On comprend qu'il suffit que la circulation du gaz prélevé contre la surface de refroidissement s'effectue globalement de l'aval vers l'amont pour obtenir l'effet recherché par l'invention. Cet effet se conservera malgré des retours limités du gaz prélevé vers l'aval, ces retours pouvant résulter de contraintes mécaniques ou aérodynamiques.

Avantageusement aussi, le prélèvement de gaz est centripète, l'orifice de prélèvement étant dans la paroi extérieure du rotor de compresseur. Cette disposition a pour effet de raccourcir le chemin que doit parcourir le gaz prélevé depuis l'orifice de prélèvement jusqu'à l'entrée de la cavité de refroidissement, et pour résultat d'autoriser une connexion courte. Dans un mode de réalisation préféré, l'orifice de prélèvement constitue aussi l'entrée de la cavité de refroidissement, c'est à dire débouche directement dans ladite cavité.

Avantageusement, la turbomachine comportera plusieurs cavités de refroidissement dans le rotor de compresseur, afin de fournir du gaz prélevé à des récepteurs différents et sensiblement indépendamment l'un de l'autre. En d'autres termes, le débit de gaz pressurisé fourni par une cavité de refroidissement n'aura qu'une influence réduite sur la température du gaz pressurisé fourni par une autre cavité de refroidissement.

Avantageusement, les cavités de refroidissement seront disposées selon la direction amont-aval, afin de fournir simultanément du gaz prélevé à des conditions de température et de pression différentes. Ainsi, une cavité de refroidissement située en amont du compresseur fournira du gaz pressurisé à une température et une pression inférieures à celles du gaz fourni par une cavité de refroidissement en aval du compresseur.

Dans le cas d'un turbomoteur comportant une turbine coaxiale au compresseur et située en aval dudit compresseur, le rotor de ladite turbine devant être refroidi par le passage centrifuge d'un flux de gaz, on disposera avantageusement sur la turbomachine un tube coaxial au compresseur et à la turbine, l'extrémité amont de ce tube étant connectée à la sortie de la cavité de refroidissement et l'extrémité aval de ce tube étant connectée au rotor de turbine à refroidir. La fonction de ce tube est d'amener directement le gaz prélevé vers le rotor de turbine en passant de l'amont vers l'aval par le centre de la turbomachine, c'est à dire au voisinage de son axe géométrique. Cette disposition très simple permet d'exploiter la région centrale du turbomoteur qui est habituellement peu occupée. Elle autorise aussi l'acheminement du gaz de refroidissement par un conduit droit, court et de section importante, ce qui minimisera les pertes de charge.

Avantageusement dans le cas d'un rotor de turbine comportant au moins deux étages, deux étages A et B seront connectés respectivement à deux cavités de refroidissement A et B par respectivement les tubes A et B avec la disposition suivante, l'étage A étant considéré en amont de l'étage B : la cavité de refroidissement A est en aval de la cavité de refroidissement B, et le tube B passe par l'intérieur du tube A. Une telle disposition a pour effet d'organiser en flux concentriques sans croisements l'acheminement des gaz prélevés depuis les cavités de refroidissement vers les étages de turbine respectifs à refroidir, le flux de gaz prélevé issu d'une cavité de refroidissement B passant par l'intérieur du flux de gaz prélevé issu d'une cavité de refroidissement A. Cette disposition permet ainsi d'acheminer simplement et sans croisement les différents flux de gaz prélevés, depuis les cavités de refroidissement qui les ont produits jusqu'aux étages de turbine à refroidir. Cette disposition permet aussi d'alimenter les différents étages de turbine en gaz prélevé à des conditions de température adaptées à chaque étage : un étage situé plus en aval de la turbine, donc moins chaud, recevant un gaz prélevé issu d'une cavité de refroidissement plus en amont du compresseur, donc également moins chaud. Engin, cette disposition permet de conserver des sections de passage importantes qui ne produisent pas de pertes de charge dans les flux de gaz prélevé.

La présente invention est particulièrement efficace lorsque le rotor de compresseur est à disques, car les disques pénétrant dans la cavité d'échange augmentent la surface de refroidissement, ce qui a pour effet d'augmenter la capacité de la cavité de refroidissement à refroidir le gaz prélevé.

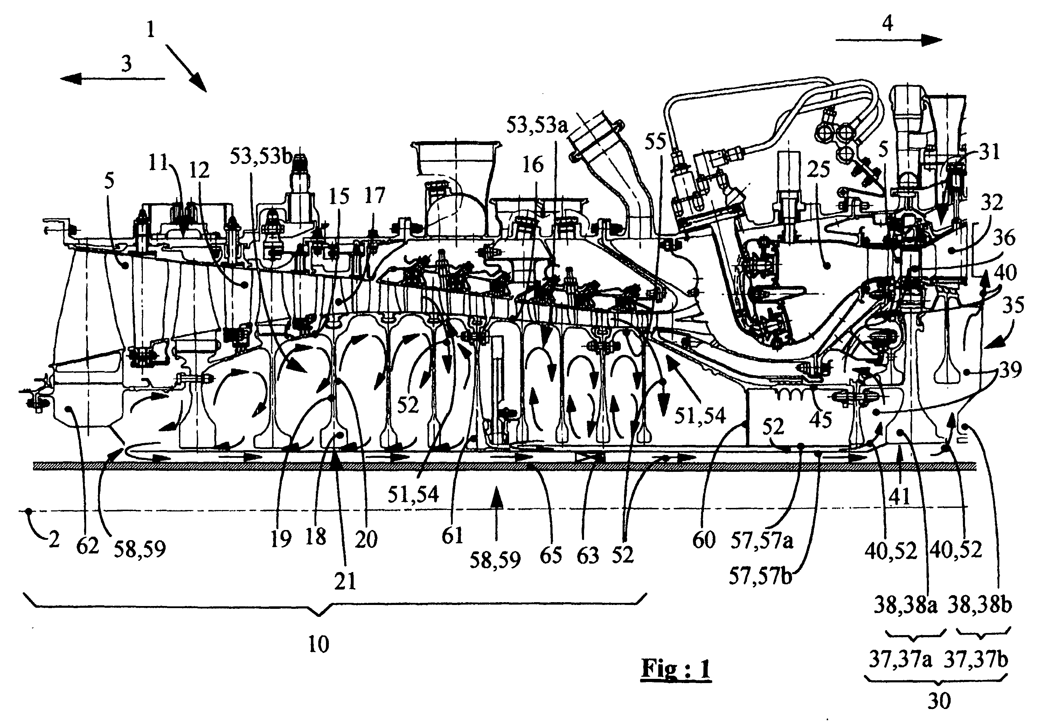

L'invention sera mieux comprise et les avantages qu'elle procure apparaitront plus clairement au vu d'un exemple détaillé de réalisation et de la figure annexée illustrant par une vue partielle en coupe un turbomoteur à double corps pour aéronef. On notera que la turbomachine comporte ici deux dispositifs de fourniture de gaz pressurisé : A et B.

On se reportera à la figure unique, et on rappellera en premier lieu la structure d'une turbomachine. La turbomachine 1 a une forme générale de révolution autour de l'axe géométrique 2 et est traversée de l'amont 3 vers l'aval 4 par la veine de gaz 5. La veine de gaz 5 traverse en premier lieu de l'amont 3 vers l'aval 4 un compresseur 10 rotatif à aubes. Le compresseur 10 comporte un stator 11 délimitant extérieurement la veine de gaz 5 et supportant une pluralité d'aubes 12 dites fixes. Le compresseur 10 comporte également un rotor de compresseur 15 tournant selon l'axe géométrique 2, ce rotor de compresseur 15 comportant une paroi extérieure 16 au contact de la veine de gaz 5, ladite paroi extérieure 16 supportant une pluralité d'aubes 17 dites tournantes, lesdites aubes 17 traversant radialement la veine de gaz 5 et en assurant la compression en coopération avec les aubes fixes et la forme particulière de la veine de gaz 5. Pour résister à la force centrifuge produite par la rotation du rotor de compresseur 15, on dispose sous chaque étage d'aubes tournantes 17 un disque 18 solidaire par sa périphérie à la paroi extérieure 16 du rotor de compresseur 15. Chaque disque 18 est disposé sensiblement selon un plan radial à l'axe géométrique 2, est délimité latéralement par deux flancs 19 et 20, et est délimité intérieurement par un évidement central 21.

La veine de gaz 5 traverse ensuite la chambre de combustion 25 où elle subit une importante élévation de température, la veine de gaz 5 arrivant ensuite dans la turbine 30 qu'elle traverse également de l'amont 3 vers l'aval 4.

La turbine 30 comporte un stator 31 délimitant extérieurement la veine de gaz 5, ce stator 31 supportant des aubes 32 dites fixes. La turbine 30 comporte également un rotor 35 tournant selon l'axe géométrique 2 et supportant à sa périphérie une pluralité d'aubes 36 dites tournantes traversant radialement la veine de gaz 5 et recueillant une partie de l'énergie accumulée dans ladite veine de gaz 5. Les aubes tournantes 36 "tournantes" sont réparties selon deux étages 37, soit 37a en amont 3 et 37b en aval 4. Chaque étage 37 comporte également un disque de turbine 38 assurant la résistance à la force centrifuge de rotation. Chaque disque de turbine 38 comporte lui-même une cavité radiale 39 permettant la circulation centrifuge d'un flux de gaz de refroidissement centrifuge 40, ce flux de gaz de refroidissement centrifuge 40 étant amené par le centre 41 du disque 38 et traversant radialement le disque de turbine 38 et les aubes tournantes 36.

La turbine 30 est coaxiale au compresseur 10, et le rotor de turbine 35 est relié au rotor de compresseur 15 par un arbre d'entrainement 45 habituellement de grand diamètre.

Dans cet exemple, la turbomachine 1 comporte deux dispositifs de fourniture de gaz pressurisé A et B. On commencera par décrire leurs éléments communs. Le dispositif de fourniture de gaz pressurisé est disposé dans le rotor de compresseur 15. Ce dispositif de fourniture comporte en premier lieu un orifice de prélèvement de gaz 51 centripète et disposé dans la paroi extérieure 16. On référencera 52 le gaz ainsi prélevé. Le dispositif de fourniture 50 comporte aussi une cavité de refroidissement 53 intérieure au rotor de compresseur 15. La cavité de refroidissement 53 utilise le volume intérieur du rotor de compresseur 15 et comporte une entrée 54 qui se confond dans cet exemple à l'orifice de prélèvement de gaz 51. La cavité de refroidissement 53 comporte aussi une surface de refroidissement 55 constituée au moins en partie par au moins une partie de la paroi extérieure 16 du rotor de compresseur 15, cette surface de refroidissement 55 étant située en amont 3 de l'orifice de prélèvement de gaz 51. La cavité de refroidissement 53 est dans cet exemple délimitée vers l'amont 3 par un disque 61 et intérieurement par un tube arrivant au voisinage dudit disque 61, l'espace 58 laissé entre le disque 61 et le tube 57 constituant la sortie de ladite cavité de refroidissement 53. La cavité de refroidissement 53 peut être traversée par un nombre variable de disques 18, le tube 57 passant par l'évidement central 21 de chacun de ces disques 18 en laissant un espace 59 suffisant pour permettre le passage du gaz prélevé 52 de l'aval 4 vers l'amont 3. Le tube 57 se prolonge vers l'aval 4 jusqu'à la cavité radiale 39 d'un disque de turbine 38 auquel il est connecté. Dans cet exemple, la cavité de refroidissement 53 est délimitée vers l'aval 4 par une cloison aval 60 du rotor de compresseur 15, ladite cloison aval 60 étant rattachée à sa périphérie à la paroi extérieure 16 en aval 4 de l'orifce de prélèvement de gaz 51.

Le fonctionnement de l'ensemble est le suivant : la veine de gaz 5 traverse le compresseur 10 de l'amont 3 vers l'aval 4 en subissant une compression qui en augmente la température et la pression. Du gaz 52 comprimé et donc chaud est prélevé dans la veine de gaz 5, passe par l'orifice de prélèvement 51, traverse la cavité de refroidissement 53 depuis son entrée 54 jusqu'à sa sortie 58, pénètre ensuite dans le tube 57, arrive dans la cavité radiale 39 du disque de turbine 38, remonte jusqu'aux aubes tournantes 36 associées à ce disque de turbine 38 et retourne finalement dans la veine de gaz 5 habituellement par des orifices de refroidissement non référencés aménagés dans lesdites aubes tournantes 36. Pendant son transit dans la cavité de refroidissement 53, le gaz prélevé 52 passe par les évidements centraux 21 des disques 18 traversant la cavité de refroidissement 53, le passage s'effectuant par les espaces 59 laissés entre les disques 18 et le tube 57. Pendant ce transit aussi, le gaz prélevé 52 lèche par un mouvement tourbillonnant complexe la surface de refroidissement 55 ainsi que les flancs 19 et 20 des disques 18 traversant ladite cavité de refroidissement 53. Du fait que la surface de refroidissement 55 est en amont 3 de l'orifice de prélèvement 51, cette surface de refroidissement 55 ainsi que les aubes tournantes 17 qui lui sont rattachées sont au contact de la veine de gaz 5 plus froide à cet endroit que vers l'orifice de prélèvement 51, ce qui permet le transfert de la chaleur depuis le gaz prélevé 52 vers la veine de gaz 5, cette chaleur passant par les disques 18 traversant la cavité de refroidissement 53, par la surface de refroidissement 55, et au moins en partie par les aubes tournantes 17.

On décrira maintenant les dispositions relatives des deux dispositifs de fourniture de gaz A et B. Pour ce faire, on indiquera par les lettres A, B, a, b les éléments précédemment définis. Le premier dispositif de fourniture de gaz A comporte une cavité de refroidissement A 53a vers aval 4 du rotor de compresseur 15, ladite cavité de refroidissement A 53a étant connectée par un tube A 57a à un disque de turbine A 38a situé vers amont 3 du rotor de turbine 35. Le second dispositif de fourniture de gaz B comporte également une cavité de refroidissement B 53b connectée par un tube B 57b à un disque de turbine B 38b. La cavité de refroidissement B 53b est en amont 3 de la cavité de refroidissement A 53a, alors que le tube B 57b passe par l'intérieur du tube A 57a et alors que le disque de turbine B 38b est situé en aval du disque de turbine A 38a.

On notera les dispositions particulières suivantes :
1) La cavité de refroidissement A 53a la plus en aval est délimitée vers l'aval 4 par une cloison aval 60 du rotor de compresseur 15, ladite cloison aval 60 étant raccordée par sa périphérie à l'extrémité aval de la paroi extérieure 16 du rotor de compresseur 15, ladite cloison aval 60 étant aussi raccordée dans sa partie centrale au tube A 57a. Cette même cavité de refroidissement A 53a est délimitée vers l'amont 3 par un disque commun 61 dont le bord de l'évidement central 21 est rattaché au tube B 57b. Les rattachements ainsi définis peuvent être effectués par tout moyen offrant une étanchéité suffisante au gaz prélevé, compte tenu des pressions règnant à l'intérieur de la turbomachine.
2) La cavité de refroidissement B 53b est délimitée vers l'aval 4 par le disque commun 61 précité, et vers l'amont 3 par le premier disque 62 du compresseur 10.

Les différents tubes 57 peuvent être minces afin d'en réduire la masse. Avantageusement, ils seront reliés entre eux par des entretoises 63 afin de rigidifier l'ensemble, lesdites entretoises 63 laissant évidemment passer le gaz prélevé 52.

Dans cet exemple, l'invention est appliquée au corps dit "haute pression" d'une turbomachine dite "à double corps". L'autre corps dit "basse pression" non représenté comporte un arbre 65 passant à l'intérieur du tube B 57b et reliant une turbine dite "basse pression" non représentée à un compresseur dit "basse pression" également non représenté.

Les avantages de la présente invention appliqués au refroidissement du rotor de turbine apparaissent maintenant plus clairement :
a) Par rapport à un refroidissement du rotor de turbine effectué directement avec le gaz prélevé, non refroidi, l'invention permet d'effectuer ce même refroidissement du rotor de turbine avec un débit de gaz plus faible, ce qui augmente le rendement de cycle global de la turbomachine et en réduit de ce fait la consommation.
b) Cette façon de refroidir le gaz prélevé n'entraine qu'une augmentation très faible de la masse de la turbomachine, soit en pratique la masse des tubes, au contraire des systèmes avec refroidisseurs séparés et donc plus lourds. Cet avantage est appréciable en aéronautique.
c) Le refroidisseur est intrinsèque au rotor de compresseur et n'entraine de ce fait aucun freinage aérodynamique de la turbomachine utilisée pour la propulsion des aéronefs, au contraire des refroidisseurs classiques qui sont habituellement mis en place dans le flux secondaire de la turbomachine, et qui de ce fait dégradent la pression totale du flux et le rendement thermodynamique de la turbomachine.

La présente invention n'est pas limitée à l'exemple qui vient d'en être donné, mais en couvre au contraire toutes les variantes qui pourraient lui être apportées sans sortir de son cadre ni de son esprit.

La turbomachine peut être à simple corps ou à corps multiples, et l'invention peut s'appliquer indifféremment à tous les corps.

Dans cet exemple, la turbomachine comporte un compresseur dit "en ligne". La présente invention est également applicable à une turbomachine comportant un compresseur centrifuge ou un compresseur mixte.

Dans cet exemple, les orifices de prélèvement 51 débouchent directement dans les cavités de refroidissement 53 et se confondent de ce fait avec les entrées 54 desdites cavités. Toutefois, les orifices de prélèvement 51 peuvent aussi être distincts desdites entrées 54.

Dans cet exemple, la turbomachine 1 comporte un rotor de compresseur 15 à disques 18. L'invention peut aussi être appliquée à une turbomachine comportant un rotor de compresseur 15 sans disques, des cloisons devant alors être aménagées pour délimiter axialement les cavités de refroidissement 53.

Dans cet exemple enfin, le terme "étage" 37 est pris au sens propre et correspond à un disque de turbine 38 avec ses aubes tournantes 36. Selon l'invention, un étage 37 peut englober plusieurs disques de turbine 38 avec leurs aubes tournantes 36 qui seront refroidis ensembles par un même flux de gaz prélevé 52. Une telle solution est à préférer en raison de sa simplicité vers l'aval 4 de la turbine, la température y étant plus basse.

## Revendications

1. Turbomachine comportant un dispositif de fourniture de gaz pressurisé, ladite turbomachine (1) comportant un compresseur (10) rotatif à aubes (12, 17) traversé de l'amont (3) vers l'aval (4) par une veine de gaz (5) dont il assure la compression, ledit compresseur (10) comportant un rotor de compresseur (15), ledit rotor de compresseur (15) comportant une paroi extérieure (16) au contact de la veine de gaz (5), ledit dispositif de fourniture de gaz pressurisé comportant notamment un orifice de prélèvement (51) de gaz connecté à l'entrée (54) d'une cavité de refroidissement (53), ledit orifice de prélèvement (51) étant sur le compresseur (10) et débouchant dans la veine de gaz (5), ladite cavité de refroidissement (53) comportant aussi une sortie (58) ainsi qu'une surface de refroidissement (55), la cavité de refroidissement (53) étant dans le rotor de compresseur (15),
la surface de refroidissement (55) étant constituée au moins en partie par au moins une partie de la paroi extérieure (16) du rotor de compresseur (15),
**caractérisée en ce que** la surface de refroidissement (55) est en amont (3) de l'orifice de prélèvement (51).

2. Turbomachine selon la revendication 1 **caractérisée en ce que** la surface de refroidissement (55) s'étend globalement de l'aval (4) vers l'amont (3), afin d'amener le gaz prélevé (52) contre des zones de la surface de refroidissement (55) globalement de plus en plus froides.

3. Turbomachine selon la revendication 1 ou 2, **caractérisée en ce que** l'orifice de prélèvement (51) est dans la paroi extérieure (16) du rotor de compresseur (15), afin de raccourcir le chemin que doit parcourir le gaz prélevé (52) entre l'orifice de prélèvement (51) et l'entrée (54) de la cavité de refroidissement (53).

4. Turbomachine selon l'une quelconque des revendications 1 à 3, **caractérisée en ce qu'**elle comporte plusieurs cavités de refroidissement (53) dans le rotor de compresseur (15), afin de fournir du gaz prélevé (52) à des récepteurs différents indépendamment l'un de l'autre.

5. Turbomachine selon la revendication 4, **caractérisée en ce que** les cavités de refroidissemnt (53) sont disposées selon la direction amont-aval (3,4), afin de fournir simultanément du gaz prélevé (52) à des conditions de température et de pression différentes.

6. Turbomachine selon l'une quelconque des revendications 1 à 5, ladite turbomachine (1) comportant une turbine (30) coaxiale au compresseur (10) et située en aval (4) dudit compresseur (10), le rotor (35) de ladite turbine (30) étant refroidi par le passage d'un flux de gaz centrifuge (40), **caractérisée en ce qu'**elle comporte un tube (57) coaxial au compresseur (10) et à la turbine (30), l'extrémité amont (3) de ce tube (57) étant connectée à la sortie (58) d'une cavité de refroidissement (53) et l'extrémité aval (4) de ce tube (57) étant connectée au rotor de turbine (35), afin d'amener directement le gaz prélevé (52) de la cavité de refroidissement (53) au rotor de turbine (35) en passant de l'amont (3) vers l'aval (4) par le centre de la turbomachine (1).

7. Turbomachine selon la revendication 6, **caractérisée en ce que** le tube (57) délimite intérieurement la cavité de refroidissement (53).

8. Turbomachine selon la revendication 6 ou 7, le rotor de turbine (35) comportant au moins deux étages (37), deux étages A et B (37a, 37b) étant connectés respectivement à deux cavités de refroidissement A et B (53a, 53b) par respectivement deux tubes A et B (57a, 57b), l'étage A (37a) étant considéré en amont (3) de l'étage B (37b), **caractérisé en ce que** la cavité de refroidissement A (53a) est en aval (4) de la cavité de refroidissement B (53b), et **en ce que** le tube B (57b) passe par l'intérieur du tube A (57a), afin d'organiser en flux concentriques sans croisements l'acheminement des gaz prélevés (52) vers les étages (37) à refroidir.

9. Turbomachine selon l'une quelconque des revendications 1 à 8, ladite turbomachine (1) comportant un compresseur (10) à disques (18), lesdits disques (18) comportant un évidement central (21) et pénétrant dans la cavité d'échange (53), les deux flancs (19, 20) de chacun des disques (18) étant bordés par la cavité d'échange (53), **caractérisé en ce que** le gaz prélevé (52) passe dans l'évidement central (21), afin de faire passer aussi le gaz prélevé (52) contre toute la surface desdits flancs (19, 20).

## Patentansprüche

1. Turbomaschine mit einer Vorrichtung zur Lieferung von Druckgas,
wobei die Turbomaschine (1) einen rotierenden Verdichter (10) mit Schaufeln (12, 17) aufweist, der von der stromaufwärtigen Seite (3) zur stromabwärtigen Seite (4) von einem Gasstrom (5) durchdrungen wird, wobei
der Verdichter (10) einen Verdichterrotor (15) aufweist,
der Verdichterrotor (15) eine Außenwand (16) aufweist, die mit dem Gasstrom (5) in Kontakt steht,
die Vorrichtung zur Lieferung von Druckgas insbesondere eine Gasentnahmeöffnung (51) aufweist, die mit dem Eingang (54) eines Kühlhohlraums (53) verbunden ist,
die Entnahmeöffnung (51) an dem Verdichter (10) angeordnet ist und in den Gasstrom (5) mündet,
der Kühlhohlraum (53) außerdem einen Ausgang (58) sowie eine Kühlfläche (55) umfaßt,
der Kühlhohlraum (53) in dem Verdichterrotor (15) angeordnet ist und
zumindest ein Teil der Kühlfläche (55) von einem Teil der Außenwand (16) des Verdichterrotors (15) gebildet ist,
**dadurch gekennzeichnet,**
**daß** die Kühlfläche (55) stromaufwärts (3) der Entnahmeöffnung (53) liegt.

2. Turbomaschine nach Anspruch 1, **dadurch gekennzeichnet, daß** die Kühlfläche (55) sich global von der stromabwärtigen Seite (4) zur stromaufwärtigen Seite (3) erstreckt, um das entnommene Gas (52) gegen die insgesamt immer kälteren Zonen der Kühlfläche (55) zu führen.

3. Turbomaschine nach Anspruch 1 oder 2, **dadurch gekennzeichnet, daß** die Entnahmeöffnung (51) in der Außenwand (16) des Verdichterrotors (15) angeordnet ist, um den Weg zu verkürzen, den das entnommene Gas (52) zwischen der Entnahmeöffnung (51) und dem Eingang (54) des Kühlhohlraums (53) durchlaufen muß.

4. Turbomaschine nach einem der Ansprüche 1 bis 3, **dadurch gekennzeichnet, daß** sie mehrere Kühlhohlräume (53) in dem Verdichterrotor (15) aufweist, um entnommenes Gas (52) an verschiedene, voneinander unabhängige Empfänger zu liefern.

5. Turbomaschine nach Anspruch 4, **dadurch gekennzeichnet, daß** die Kühlhohlräume (53) in der von der stromaufwärtigen zur stromabwärtigen Seite (3, 4) verlaufenden Richtung angeordnet sind, um gleichzeitig entnommenes Gas (52) mit unterschiedlichen Temperatur- und Druckzuständen zu liefern.

6. Turbomaschine nach einem der Ansprüche 1 bis 5,
wobei die Turbomaschine (1) eine zu dem Verdichter (10) koaxiale und auf der stromabwärtigen Seite (4) des Verdichters (10) angeordnete Turbine (30) aufweist und wobei der Rotor (35) der Turbine (30) durch den Durchlauf einer zentrifugalen Gasströmung (40) gekühlt wird,
**dadurch gekennzeichnet,**
**daß** sie ein zu dem Verdichter (10) und zu der Turbine (30) koaxiales Rohr (57) aufweist,
**daß** das stromaufwärtige Ende dieses Rohrs (57) mit dem Ausgang (58) eines Kühlhohlraums (53) verbunden ist
und **daß** das stromabwärtige Ende des Rohrs (57) mit dem Turbinenrotor (35) verbunden ist, um das aus dem Kühlhohlraum (53) entnommene Gas (52) direkt zu dem Turbinenrotor (35) zu führen, indem es von der stromabwärtigen Seite (3) durch das Zentrum der Turbomaschine (1) zur stromabwärtigen Seite (4) wandert.

7. Turbomaschine nach Anspruch 6, **dadurch gekennzeichnet, daß** das Rohr (57) den Kühlhohlraum (53) innen begrenzt.

8. Turbomaschine nach Anspruch 6 oder 7, bei der der Turbinenrotor (35) wenigstens zwei Stufen (37) besitzt und zwei Stufen A und B (37a, 37b) über zwei Rohre A bzw. B (57a, 57b) mit zwei Kühlhohlräumen A bzw. B (53a, 53b) verbunden sind, wobei die Stufe A (37a) als stromaufwärts (3) der Stufe B (37b) liegend betrachtet wird,
**dadurch gekennzeichnet,**
**daß** der Kühlhohlraum A (53a) stromabwärts (4) des Kühlhohlraums B (53b) liegt
und **daß** das Rohr B (57b) durch den Innenraum des Rohrs A (57a) verläuft, um die Weiterleitung der entnommenen Gase (52) zu den zu kühlenden Stufen (37) kreuzungsfrei in konzentrischen Flüssen zu organisieren.

9. Turbomaschine nach einem der Ansprüche 1 bis 8,
wobei die Turbomaschine (1) einen Verdichter (10) mit Scheiben (18) aufweist,
die Scheiben (18) eine zentrale Aussparung (21) besitzen und in den Wärmetauschhohlraum (53) eindringen und
die beiden Flanken (19, 20) jeder der Scheiben (18) von dem Wärmetauschhohlraum (53) begrenzt werden,
**dadurch gekennzeichnet,**
**daß** das entnommene Gas (52) in die zentrale Aussparung (21) wandert, um das entnommene Gas (52) auch gegen die gesamte Fläche der genannten Flanken (19, 20) wandern zu lassen.

## Claims

1. Turbomachine comprising a device for supplying pressurized gas, the said turbomachine (1) comprising a rotary compressor (10) with blades (12, 17) which compresses a stream of gas (5) flowing through it from the upstream end (3) to the downstream end (4), the said compressor (10) comprising a compressor rotor (15), the said compressor rotor (15) comprising an outer wall (16) in contact with the stream of gas (5), the said device for supplying pressurized gas comprising in particular a gas bleed orifice (51) connected to the inlet (54) of a cooling cavity (53), the said bleed orifice (51) being on the compressor (10) and opening into the stream of gas (5), the said cooling cavity (53) also comprising an outlet (58) plus a cooling surface (55), the cooling cavity (53) being within the compressor rotor (15), the cooling surface (55) consisting at least in part of at least one portion of the outer wall (16) of the compressor rotor (15), **characterized in that** the cooling surface (55) is upstream (3) of the bleed orifice (51).

2. Turbomachine according to Claim 1, **characterized in that** the cooling surface (55) overall extends overall from the downstream end (4) to the upstream end (3) in order to bring the bled gas (52) against overall increasingly cold regions of the cooling surface (55).

3. Turbomachine according to Claim 1 or 2, **characterized in that** the bleed orifice (51) is in the outer wall (16) of the compressor rotor (15) in order to shorten the path to be travelled by the bled gas (52) between the bleed orifice (51) and the inlet (54) of the cooling cavity (53).

4. Turbomachine according to any one of Claims 1 to 3, **characterized in that** it comprises several cooling cavities (53) in the compressor rotor (15) in order to supply the bled gas (52) to different receivers independently of one another.

5. Turbomachine according to Claim 4, **characterized in that** the cooling cavities (53) are arranged in the downstream-upstream direction (3, 4) in order to simultaneously supply the bled gas (52) under different temperature and pressure conditions.

6. Turbomachine according to any one of Claims 1 to 5, the said turbomachine (1) comprising a turbine (30) coaxial with the compressor (10) and situated downstream (4) from the said compressor (10), the rotor (35) of the said turbine (30) being cooled by the passage of a flow of centrifugal gas (40), **characterized in that** the turbomachine comprises a tube (57) coaxial with the compressor (10) and with the turbine (30), the upstream end (3) of this tube (57) being connected to the outlet (58) of a cooling cavity (53) and the downstream end (4) of this tube (57) being connected to the turbine rotor (35) in order to bring the bled gas (52) directly from the cooling cavity (53) to the turbine rotor (35), passing from the upstream end (3) to the downstream end (4) through the centre of the turbomachine (1).

7. Turbomachine according to Claim 6, **characterized in that** the tube (57) internally delimits the cooling cavity (53).

8. Turbomachine according to Claim 6 or 7, the turbine rotor (35) comprising at least two stages (37), two stages A and B (37a, 37b) being respectively connected to two cooling cavities A and B (53a, 53b) by two respective tubes A and B (57a, 57b), stage A (37a) being considered to be upstream (3) of stage B (37b), **characterized in that** the cooling cavity A (53a) is downstream (4) of the cooling cavity B (53b), and **in that** the tube B (57b) passes through the inside of the tube A (57a) in order to arrange for the bled gases (52) to be conveyed towards the stages (37) to be cooled in concentric flows without crossovers.

9. Turbomachine according to any one of Claims 1 to 8, the said turbomachine (1) comprising a compressor (10) with discs (18), the said discs (18) comprising a central cutout (21) and penetrating the exchange cavity (53), the two sides (19, 20) of each of the discs (18) being bordered by the exchange cavity (53), **characterized in that** the bled gas (52) flows into the central cutout (21) in order to cause the bled gas (52) also to flow over the whole surface of the said sides (19, 20).
